# FASCICULE DE BREVET EUROPEEN

(11) **EP 3 224 070 B1**
(45) Date de publication et mention de la délivrance du brevet: **19.02.2020**
(21) Numéro de dépôt: 15800792.2
(22) Date de dépôt: 24.11.2015
(51) Int. Cl.: B60J 3/04, B60Q 1/076, G01J 1/42, G02C 7/10

(54) **SYSTÈME D'AIDE À LA CONDUITE D'UN VÉHICULE POUR LA RÉDUCTION DE CONTRASTE LUMINEUX**
FAHRZEUGANTRIEBSHILFSSYSTEM ZUR REDUZIERUNG VON LICHTKONTRAST
VEHICLE DRIVING AID SYSTEM FOR REDUCING LIGHT CONTRAST

(30) Priorité: 27.11.2014 FR 1461605
(43) Date de publication de la demande: 04.10.2017
(73) Titulaire: Valeo Vision, 93012 Bobigny Cedex (FR)
(72) Inventeur: HUE, David, 93012 Bobigny Cedex (FR); EL IDRISSI, Hafid, 93012 bobigny Cedex (FR)
(86) Numéro de dépôt international: PCT/EP2015/077497
(87) Numéro de publication internationale: WO 2016/083371

(56) Documents cités:
- EP-A2- 2 415 638
- WO-A1-2011/105987
- FR-A1- 2 988 333
- FR-A1- 2 988 493

## Description

L'invention concerne un système d'aide à la conduite d'un véhicule automobile.

La présente invention concerne les systèmes destinés à apporter une aide à la conduite des véhicules automobiles, particulièrement lorsque la luminosité extérieure est faible, et impose l'allumage des feux.

Les faisceaux lumineux émis par les dispositifs d'éclairage équipant les véhicules sont régis par des réglementations nationales et internationales, qui fixent des intensités maximales et minimales à respecter, par exemple sur un écran placé à distance et dans l'axe du dispositif d'éclairage. Ces réglementations ont pour finalité de simultanément :
- fournir au conducteur du véhicule équipé de ce dispositif d'éclairage un éclairage satisfaisant de la scène de route sur laquelle il circule, pour qu'il puisse appréhender son environnement dans les meilleures conditions possibles, et
- éviter d'éblouir les conducteurs d'autres véhicules qui circulent en sens inverse (véhicules croisés).

Malgré ces réglementations, il est néanmoins fréquent que le conducteur d'un véhicule soit ébloui par des dispositifs d'éclairages de véhicules croisés qui sont par exemple soit mal réglés, soit éclairent différemment de la normale du fait d'un chargement important à l'arrière du véhicule, soit du fait des conditions météorologiques (pluie, neige, etc.). Cet éblouissement provoque une adaptation de l'œil du conducteur par rétractation de la pupille de l'œil de façon à réduire la lumière perçue. Cette adaptation à l'éblouissement provoque en contrepartie une baisse générale de la luminosité perçue dans l'ensemble du champ de vision. Ainsi, le conducteur voit moins les zones en périphérie de la zone d'éblouissement dans lesquels peuvent se trouver des éléments susceptibles de créer des situations dangereuses, tels que des obstacles ou des piétons sur la route ou le bord de la route. Ainsi, du fait de ce contraste important entre la zone d'éblouissement et les zones en périphérie, les dispositifs d'éclairages du véhicule peuvent ne pas être suffisants pour une visibilité satisfaisante dans ces zones de périphérie. Et il n'est pas envisageable d'augmenter la luminosité des dispositifs d'éclairage pour réduire suffisamment ce contraste puisque cette luminosité est elle-même limitée afin de ne pas éblouir le conducteur du véhicule croisé.

L'invention vise à pallier au moins certains des inconvénients des systèmes d'aide à la conduite connus.

En particulier, l'invention vise aussi à fournir, dans au moins un mode de réalisation de l'invention, un système d'aide à la conduite d'un véhicule automobile permettant de réduire le contraste de luminosité en cas d'éblouissement par un véhicule croisé. Il est entendu que le terme véhicule croisé employé ci-après couvre le cas d'un véhicule croisé, c'est-à-dire se déplaçant en sens opposé au véhicule équipé de l'invention, mais il couvre également le cas d'un véhicule suivi, c'est-à-dire une véhicule se déplaçant dans le même sens que le véhicule équipé de l'invention. Dans ce dernier cas, l'invention permet de limiter le contraste de luminosité consécutif au dispositif de signalisation arrière d'un véhicule suivi.

Le document WO2011/ 105987A1 divulgue un système avec un système de commande d'éclairage commandant automatiquement le passage d'un feu route à un feu de croisement en fonction de la détection de véhicule croisé. Ce système de commande est couplé à un système d'obscurcissement d'un écran posé sur un pare-brise.

Pour ce faire, l'invention concerne un système d'aide à la conduite d'un véhicule automobile selon la revendication 1..

Un système d'aide à la conduite selon l'invention permet donc, en cas d'éblouissement par un véhicule roulant en sens inverse ou en même sens, de réduire le contraste entre l'éclairage dudit véhicule croisé et l'éclairage du véhicule équipé du système d'aide selon l'invention. Ainsi, le conducteur du véhicule voit mieux la zone éclairée proche et autour du véhicule croisé dans laquelle peuvent se trouver des obstacles, des piétons ou autre éléments susceptibles d'entrainer une situation dangereuse.

Avantageusement et selon l'invention, le dispositif d'éclairage est commandé par un signal pulsé généré par les moyens de commande, et en ce que les moyens de réduction de l'éblouissement comprennent au moins un moyen doté d'obturateurs commandés par ledit signal pulsé en synchronisme avec le dispositif d'éclairage. Dans une telle situation, le moyen doté d'obturateurs est une paire de lunettes et/ou un pare-brise dudit véhicule et/ou un pare-soleil, notamment amovible, dudit véhicule.

Selon cet aspect de l'invention, les obturateurs fonctionnent en synchronisme avec le dispositif d'éclairage grâce à un signal pulsé commandant dans un niveau haut, l'allumage du dispositif d'éclairage et l'ouverture des obturateurs, et dans un niveau bas, l'extinction du dispositif d'éclairage et la fermeture des obturateurs. Cela permet d'obtenir un éclairage conforme aux différentes législations en termes d'éclairage moyen, tout en réduisant l'éblouissement du conducteur du véhicule du fait de la fermeture périodique de l'obturateur.

Avantageusement et selon ce dernier aspect de l'invention, les obturateurs comportent des cristaux liquides dont l'orientation est modifiée par le signal pulsé.

Selon cet aspect de l'invention, les cristaux liquides permettent un basculement à haute vitesse entre une orientation permettant le passage de la lumière (transparence des verres pour le cas de la paire de lunettes) et une orientation empêchant le passage de la lumière (opacité des verres pour le cas de la paire de lunettes), correspondant respectivement aux obturateurs ouverts et fermés.

Selon l'invention, les moyens de détection sont adaptés pour détecter la présence et la position d'un ou plusieurs véhicules croisés, les moyens de commande adaptant la zone d'éclairage en fonction desdites présence et position du véhicule croisé de façon à ne pas éblouir le conducteur du véhicule croisé.

Selon cet aspect de l'invention, les informations provenant des moyens de détection permettent à la centrale de commande de définir la zone ou les zones dans lesquelles se trouve(nt) le ou les véhicules croisés et adapter l'éclairage de son dispositif d'éclairage de façon à ne pas éblouir le ou les conducteurs du ou des véhicules croisés.

Avantageusement et selon l'invention, les moyens de détection comprennent une caméra dirigée vers l'extérieur et vers l'avant du véhicule.

Selon l'invention, dans la zone d'éclairage, l'éclairage est minimisé dans une sous-zone où se situe le véhicule croisé.

Selon cet aspect de l'invention, l'éclairage n'éblouit pas le conducteur du véhicule croisé et reste conforme aux diverses législations.

Selon l'invention, dans la zone d'éclairage, l'éclairage est augmenté hors d'une sous-zone où se situe le véhicule croisé.

Selon cet aspect de l'invention, le dispositif d'éclairage permet d'obtenir un éclairage important hors de la zone où se situe le véhicule croisé, de façon à ce que l'éclairage hors de la zone où se situe le véhicule croisé soit proche d'un éclairage obtenu quand le dispositif d'éclairage est dans le mode d'éclairage appelé feu de route ou communément plein phare.

L'invention concerne également un système d'aide caractérisé en combinaison par tout ou partie des caractéristiques mentionnées ci-dessus ou ci-après.
On notera que le dispositif d'éclairage comprend au moins une source de lumière de type diode électroluminescente, notamment une diode laser.

L'invention couvre enfin un véhicule automobile comprenant un dispositif d'éclairage, destiné à éclairer une scène de route à l'avant du véhicule, des moyens de détection d'un véhicule croisé, et un système d'aide à la conduite tel que défini seul ou en combinaison ci-dessus.

D'autres buts, caractéristiques et avantages de l'invention apparaîtront à la lecture de la description suivante donnée à titre uniquement non limitatif et qui se réfère aux figures annexées dans lesquelles :
- la figure 1 est une vue schématique en coupe partielle d'un véhicule équipé d'un système d'aide à la conduite selon un mode de réalisation de l'invention,
- la figure 2 est une vue schématique de la zone d'éclairage d'un dispositif d'éclairage d'un véhicule équipé d'un système d'aide à la conduite selon un mode de réalisation de l'invention,
- la figure 3 est un diagramme temporel représentant un signal pulsé de commande d'un dispositif d'éclairage d'un véhicule équipé d'un système d'aide à la conduite selon un mode de réalisation de l'invention.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres réalisations.

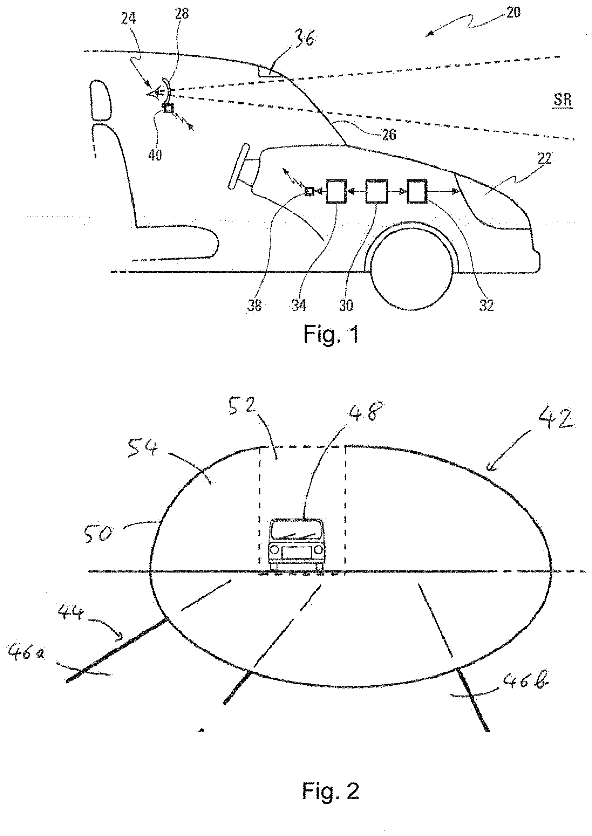

La figure 1 représente de façon schématique en coupe partielle un véhicule 20 comprenant un système d'aide selon un mode de réalisation de l'invention. Le véhicule 20 est équipé de manière conventionnelle par un dispositif 22 d'éclairage apte à émettre un faisceau d'éclairage d'une scène de route SR grâce à une source lumineuse, et est piloté par un conducteur, symbolisé par son œil 24. La scène de route correspond à ce qu'observe le conducteur 24 du véhicule 20. Le conducteur 24 observe ici la scène de route devant le véhicule 20 et à travers le pare-brise 26.

Le dispositif 22 d'éclairage est géré par des moyens 32 de gestion du dispositif 22 d'éclairage, pouvant être par exemple un calculateur, un microcontrôleur, etc.

D'autre part, le système d'aide comprend des moyens de réduction de l'éblouissement du conducteur 24, comprenant dans ce mode de réalisation :
- un module 34 de gestion des moyens de réduction de l'éblouissement,
- un émetteur 38, adapté pour transmettre par un protocole de communication sans-fil des données relatives à la réduction de l'éblouissement,
- des lunettes 28, dont les verres sont dotés d'obturateurs, et recevant des données relatives à la réduction de l'éblouissement via un récepteur 40.

Les moyens de réduction de l'éblouissement et les moyens 32 de gestion du dispositif 22 d'éclairage sont commandés par des moyens de commande, par exemple une centrale formée d'un microcontrôleur, ci-après dénommée centrale 30 de commande. De façon alternative, les moyens de commande se présentent sous la forme d'un ensemble de modules de traitements décentralisés. La centrale 30 de commande permet la transmission de données et de commandes relatives à la réduction de l'éblouissement et à l'augmentation de l'éclairage du dispositif 22 d'éclairage.

Les moyens de réduction de l'éblouissement peuvent être une paire de lunettes, comme évoqué ci-dessus. L'invention n'est cependant pas limité à ce mode de réalisation, puisque le moyen doté d'obturateurs peut prendre la forme d'un pare-brise équipant le véhicule, ou encore un pare-soleil amovible installé dans la cabine du véhicule.

La centrale 30 de commande réceptionne notamment les informations provenant des moyens de détection, par exemple une caméra 36, placée par exemple sur le pare-brise 26, au niveau du rétroviseur intérieur et dirigée vers la scène de route. Ces informations, notamment des images vidéo, permettent la détermination par la centrale 30 d'une consigne d'éclairage pour le dispositif 22 d'éclairage du véhicule 20. En particulier, la consigne d'éclairage détermine plusieurs paramètres dont notamment la zone d'éclairage, l'intensité d'éclairage et la réduction de l'éblouissement du conducteur par les moyens de réduction de l'éblouissement.

La consigne d'éclairage est notamment liée à la détection, notamment via la caméra 36, de la présence et de la position d'un ou plusieurs véhicules, dit véhicules croisés, circulant dans le sens contraire du sens de déplacement du véhicule 20. La présence et la position d'un véhicule croisé permettent notamment de définir les éléments suivants :
- la taille et les contours de la zone d'éclairage du véhicule 20, ainsi que son intensité, l'éclairage étant adapté pour ne pas éblouir le conducteur du véhicule croisé, conformément aux législations en vigueur. Le résultat d'une consigne appliquant ces derniers paramètres est décrit plus en détail dans la suite de la description en référence à la figure 2.
- la réduction de l'éblouissement du conducteur, qui est de préférence mise en place par les moyens de réduction de l'éblouissement seulement en cas d'éblouissement réel. Cet éblouissement réel est détecté par la caméra 36 et/ou par d'autres capteurs de luminosité ou d'éblouissement placés à d'autres endroits du véhicule 20. Alternativement, la réduction de l'éblouissement peut être mise en place en permanence par prévention, auquel cas la présence ou non d'un véhicule croisé n'influe pas.

Les autres paramètres déterminés par la consigne d'éclairage sont liés à la réduction de l'éblouissement par les moyens de réductions de l'éblouissement, mise en place par un synchronisme entre un éclairage pulsé et un fonctionnement alternatif des obturateurs des lunettes 28.

L'éclairage pulsé est un éclairage dont l'intensité varie entre une valeur haute et une valeur basse (proche de zéro, c'est-à-dire d'un éclairage éteint) et de valeur moyenne inférieure ou égale à la valeur maximale d'éclairage autorisée par les législations en vigueur pour un éclairage continu. L'intensité de l'éclairage étant aussi régulé en fonction de la présence ou non d'un véhicule croisé, ces valeurs haute et basse sont des valeurs autour desquelles l'intensité peut varier d'une zone d'éclairage à l'autre pour tenir compte de cette régulation due à la présence d'un véhicule croisé.

Les obturateurs des lunettes 28 recouvrant les verres, permettent de varier alternativement entre un coefficient de transmission élevée (c'est-à-dire le plus proche possible d'une transparence totale des verres, du pare-brise ou du pare-soleil) et un coefficient de transmission faible (c'est-à-dire le plus proche possible d'une opacité totale des verres, du pare-brise ou du pare-soleil). Dans ce mode de réalisation, les obturateurs sont des cristaux liquides dont l'orientation permet de faire varier le coefficient de transmission.

Le synchronisme entre l'éclairage pulsé et les obturateurs s'effectue grâce à un signal pulsé S. Le signal pulsé S est un signal alternatif périodique variant entre un niveau haut et un niveau bas. Durant chaque période de durée T, le signal pulsé S est au niveau haut pendant un temps t et au niveau bas pendant le temps restant de la période soit T-t. Le rapport cyclique du signal pulsé S est défini par la valeur a=t/T.

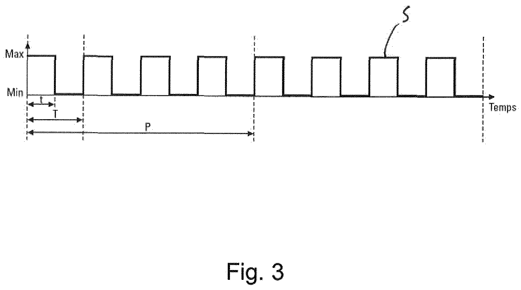

Dans ce mode de réalisation, le signal pulsé S est généré par la centrale 30 de commande puis transmis au module 34 de gestion des moyens de réduction de l'éblouissement d'une part, et aux moyens 32 de gestion du dispositif 22 d'éclairage d'autre part. Les moyens de gestion du dispositif 22 d'éclairage utilise cette commande pour générer la consigne d'éclairage transmise au dispositif 22 d'éclairage. Le module 34 de gestion des moyens de réduction transmet le signal pulsé S aux lunettes 28 via l'émetteur 38. Ce signal pulsé S est reçu par le récepteur 40 et permet la commande des obturateurs. D'autre part, les moyens 32 de gestion du dispositif 22 d'éclairage appliquent le signal pulsé S pour faire varier la valeur de l'intensité de l'éclairage du dispositif 22 d'éclairage. Un mode de réalisation du signal pulsé S est décrit dans la suite de la description en référence avec la figure 3.

À titre d'exemple, un mode de réalisation de la commande en synchronisme par signal pulsé de dispositif d'éclairage et de lunettes à obturateurs est décrit dans la demande de brevet FR2988 493.

La figure 2 représente schématiquement une zone 42 d'éclairage du dispositif 22 d'éclairage du véhicule 20 équipé d'un système d'aide à la conduite selon un mode de réalisation de l'invention. La zone 42 d'éclairage est représentée sur la scène de route SR, c'est-à-dire ce qu'observe le conducteur 24 ou la caméra 36 depuis le véhicule 20 à travers le pare-brise 26. La scène de route comprend notamment ici une route 44 à deux voies de circulations 46a, 46b. Le véhicule 20 roule sur une voie 46b de circulation et le véhicule croisé 48 est représenté roulant dans le sens inverse sur l'autre voie 46a de circulation.

Comme expliqué précédemment, le véhicule croisé 48 est détecté et les contours, la zone et l'intensité d'éclairage sont régulés en conséquence : ainsi, comme représenté sur la figure 2, la zone 42 d'éclairage est délimitée par un contour 50 conforme aux diverses réglementations en vigueur. La zone 42 d'éclairage comprend deux sous-zones : une sous-zone 52 détectée comme étant la sous-zone dans laquelle se situe le véhicule croisé 48, et une sous-zone complémentaire 54 comprenant le reste de la zone 42 d'éclairage, c'est-à-dire hors de la sous-zone 52 où se trouve le véhicule croisé 48. Ces deux sous-zones 52, 54 correspondent à deux éclairages différents :
- dans la sous-zone 52 où se situe le véhicule croisé 48, l'objectif de l'éclairage est de ne pas éblouir le conducteur du véhicule croisé 48, en se conformant aux diverses législations. Ainsi, l'éclairage est minimisé dans cette sous-zone 52, notamment son intensité est faible, de préférence nulle. La sous-zone 52 est variable dans le temps puisqu'elle suit la progression du véhicule croisé 48 sur la voie 46a, ladite progression étant détectée par la caméra 36.
- dans la sous-zone complémentaire 54, où ne se trouve pas le véhicule croisé 48, l'objectif de l'éclairage est de permettre une visibilité maximale pour le conducteur 24. Ainsi, l'éclairage est augmenté dans cette sous-zone complémentaire 54, de façon à permettre au conducteur 24 d'obtenir un éclairage proche de feux de route utilisés notamment lorsqu'aucun autre véhicule n'est présent sur la scène de route. En particulier, si aucun véhicule croisé n'est détecté, la sous-zone complémentaire 54 recouvre la totalité de la zone 42 d'éclairage et l'éclairage est identique à l'éclairage en feux de routes. Cette amélioration de la luminosité dans la zone autour du véhicule croisé 48 diminue ainsi le contraste entre l'éblouissement provenant du véhicule croisé 48 et la zone éclairée proche et autour de ce véhicule croisé 48.

À titre d'exemple, un mode de réalisation de la formation d'une telle zone 42 d'éclairage par un dispositif 22 d'éclairage est décrit dans la demande de brevet EP 2 415 638.

La figure 3 représente un diagramme temporel du signal pulsé S de commande d'un dispositif 22 d'éclairage d'un véhicule équipé d'un système d'aide à la conduite selon un mode de réalisation de l'invention. Notamment, ce diagramme est un exemple du signal pulsé S que la centrale 30 de commande génère puis transmets d'une part au module 34 de gestion des moyens de réduction de l'éblouissement et d'autre part au dispositif 22 d'éclairage pour commander celui-ci, comme décrit précédemment en référence à la figure 1.

Le signal pulsé S est un signal périodique, de période T, prenant des valeurs entre la valeur haute Max et la valeur basse Min. Pendant une période T, le signal pulsé S prend la valeur haute pendant un temps t, et la valeur basse pendant un temps T-t. La fréquence f, de formule 1/T, est choisie suffisamment élevée pour éviter tout phénomène de scintillement pour le conducteur 24 du véhicule 20. La fréquence f sera par exemple comprise entre 50Hz et 600Hz, de préférence supérieure à 100Hz, pour bénéficier du phénomène de persistance rétinienne. Le rapport cyclique, défini par la formule t/T, est ici de 0, 5, c'est-à-dire que le signal pulsé S est à sa valeur haute pendant la moitié de la période T, et à sa valeur basse pendant l'autre moitié de la période T. Au niveau des équipements qui reçoivent la consigne, cela engendre :
- au niveau des obturateurs des verres de lunettes 28 : le coefficient de transmission est élevé la moitié du temps (sur un temps égal à un multiple de la période, par exemple P = 4T sur la figure 3), et faible l'autre moitié du temps, ce qui permet de diminuer la lumière perçue par le conducteur, notamment celle provenant d'un éblouissement par la lumière provenant de l'éclairage du véhicule croisé 48. La diminution de l'éblouissement permet alors la réduction du contraste entre la zone éclairée autour et proche du véhicule croisé, et la lumière émise par le véhicule croisé 48 qui peut être éblouissante.
   au niveau du dispositif 22 d'éclairage : l'intensité d'éclairage a une valeur haute la moitié du temps et une valeur basse l'autre moitié du temps, ce qui ramène la valeur moyenne de l'éclairage à la moyenne entre la valeur haute et la valeur basse. Le synchronisme avec les obturateurs permet de ne pas réduire la luminosité perçue par le conducteur 24 de l'éclairage de son propre véhicule 20, tout en conservant une valeur de l'intensité d'éclairage moyenne conforme aux diverses législations. Cette intensité d'éclairage s'applique seulement dans la sous-zone 54 dans laquelle aucun véhicule croisé ne se trouve, et l'intensité peut varier aux alentours des valeurs hautes et basses en fonction de la visibilité souhaitée.

## Revendications

1. Système d'aide à la conduite d'un véhicule automobile, le véhicule (20) comprenant un dispositif (22) d'éclairage, destiné à éclairer une scène de route (SR) à l'avant du véhicule (20), le véhicule comprenant en outre des moyens de détection (36) d'un véhicule croisé (48), le système d'aide comprenant :
- des moyens de commande (30) recevant des informations des moyens de détection (36),
- des moyens (28, 34, 38, 40) de réduction de l'éblouissement du conducteur du véhicule automobile dû à la lumière émise par le véhicule croisé (48), commandés par les moyens de commande (30),
- des moyens (32) de gestion du dispositif (22) d'éclairage, adaptés pour augmenter l'éclairage du dispositif (22) d'éclairage du véhicule (20) et pour éviter l'éblouissement du conducteur du véhicule croisé (48), commandés par les moyens de commande (30),
et les moyens de détection (36) sont adaptés pour détecter la présence et la position d'un ou plusieurs véhicules croisés (48), **caractérise en ce que** les moyens de commande (30) adaptant la zone d'éclairage (42) en fonction desdites présence et position du véhicule croisé (48) de façon à ne pas éblouir le conducteur du véhicule croisé (48),
**en ce que** dans la zone (42) d'éclairage, l'éclairage est minimisé dans une sous-zone (52) où se situe le véhicule croisé (48), et
**en ce que** dans la zone (42) d'éclairage, l'éclairage est augmenté hors de la sous-zone (52) où se situe le véhicule croisé ou suivi (48).

2. Système d'aide selon la revendication précédente, **caractérisé en ce que** le dispositif (22) d'éclairage est commandé par un signal pulsé (S) généré par les moyens de commande (30), et **en ce que** les moyens de réduction de l'éblouissement comprennent au moins un moyen doté d'obturateurs commandés par ledit signal pulsé (S) en synchronisme avec le dispositif (22) d'éclairage.

3. Système d'aide selon la revendication précédente, **caractérisé en ce que** le moyen doté d'obturateurs est une paire de lunettes et/ou un pare-brise dudit véhicule et/ou un pare-soleil dudit véhicule.

4. Système d'aide selon la revendication 2 ou 3, **caractérisé en ce que** les obturateurs comportent des cristaux liquides dont l'orientation est modifiée par le signal pulsé (S).

5. Système d'aide selon l'une des revendications précédentes, **caractérisé en ce que** les moyens de détection (36) comprennent une caméra dirigée vers l'extérieur et vers l'avant du véhicule (20).

6. Système d'aide selon l'une quelconque des revendications précédentes, dans lequel le dispositif (22) d'éclairage comprend au moins une source de lumière de type diode électroluminescente, notamment une diode laser.

7. Véhicule automobile comprenant un dispositif (22) d'éclairage, destiné à éclairer une scène de route (SR) à l'avant du véhicule (20), des moyens de détection (36) d'un véhicule croisé (48), et un système d'aide à la conduite selon l'une quelconque des revendications précédentes.

## Patentansprüche

1. Fahrerassistenzsystem eines Kraftfahrzeugs, wobei das Fahrzeug (20) eine Beleuchtungsvorrichtung (22) umfasst, die dazu bestimmt ist, einen Straßenabschnitt (SR) vor dem Fahrzeug (20) zu beleuchten, wobei das Fahrzeug außerdem Mittel zur Erkennung (36) eines entgegenkommenden Fahrzeugs (48) umfasst, wobei das Assistenzsystem umfasst:
- Steuerungsmittel (30), welche Informationen von den Erkennungsmitteln (36) empfangen,
- Mittel (28, 34, 38, 40) zur Verringerung der Blendung des Fahrers des Kraftfahrzeugs infolge des von dem entgegenkommenden Fahrzeug (48) ausgesendeten Lichts, die von den Steuerungsmitteln (30) gesteuert werden,
- Mittel (32) zur Verwaltung der Beleuchtungsvorrichtung (22), die dafür ausgelegt sind, die Beleuchtung der Beleuchtungsvorrichtung (22) des Fahrzeugs (20) zu verstärken und die Blendung des Fahrers des entgegenkommenden Fahrzeugs (48) zu vermeiden, und von den Steuerungsmitteln (30) gesteuert werden,
und wobei die Erkennungsmittel (36) dafür ausgelegt sind, das Vorhandensein und die Position eines oder mehrerer entgegenkommender Fahrzeuge (48) zu erkennen,
**dadurch gekennzeichnet, dass** die Steuerungsmittel (30) den Beleuchtungsbereich (42) in Abhängigkeit vom Vorhandensein und von der Position des entgegenkommenden Fahrzeugs (48) so anpassen, dass der Fahrer des entgegenkommenden Fahrzeugs (48) nicht geblendet wird,
und dadurch, dass in dem Beleuchtungsbereich (42) die Beleuchtung in einem Teilbereich (52), in dem sich das entgegenkommende Fahrzeug (48) befindet, minimiert wird, und
dadurch, dass in dem Beleuchtungsbereich (42) die Beleuchtung außerhalb des Teilbereichs (52), in dem sich das entgegenkommende oder vorausfahrende Fahrzeug (48) befindet, verstärkt wird.

2. Assistenzsystem nach dem vorhergehenden Anspruch, **dadurch gekennzeichnet, dass** die Beleuchtungsvorrichtung (22) durch ein gepulstes Signal (S) gesteuert wird, das von den Steuerungsmitteln (30) erzeugt wird, und dadurch, dass die Mittel zur Verringerung der Blendung wenigstens ein Mittel umfassen, das mit Blenden ausgestattet ist, die durch das gepulste Signal (S) synchron mit der Beleuchtungsvorrichtung (22) gesteuert werden.

3. Assistenzsystem nach dem vorhergehenden Anspruch, **dadurch gekennzeichnet, dass** das mit Blenden ausgestattete Mittel eine Brille und/oder eine Windschutzscheibe des Fahrzeugs und/oder eine Sonnenblende des Fahrzeugs ist.

4. Assistenzsystem nach Anspruch 2 oder 3, **dadurch gekennzeichnet, dass** die Blenden Flüssigkristalle aufweisen, deren Ausrichtung durch das gepulste Signal (S) geändert wird.

5. Assistenzsystem nach einem der vorhergehenden Ansprüche, **dadurch gekennzeichnet, dass** die Erkennungsmittel (36) eine Kamera umfassen, die vom Fahrzeug (20) aus nach außen und nach vorn gerichtet ist.

6. Assistenzsystem nach einem der vorhergehenden Ansprüche, wobei die Beleuchtungsvorrichtung (22) wenigstens eine Lichtquelle vom Typ einer Leuchtdiode, insbesondere einer Laserdiode umfasst.

7. Kraftfahrzeug, welches eine Beleuchtungsvorrichtung (22), die dazu bestimmt ist, einen Straßenabschnitt (SR) vor dem Fahrzeug (20) zu beleuchten, Mittel zur Erkennung (36) eines entgegenkommenden Fahrzeugs (48) und ein Fahrerassistenzsystem nach einem der vorhergehenden Ansprüche umfasst.

## Claims

1. Motor vehicle driving aid system, the vehicle (20) comprising a lighting device (22), intended to illuminate a road scene (SR) at the front of the vehicle (20), the vehicle further comprising means (36) for detecting an oncoming vehicle (48), the aid system comprising:
- control means (30) receiving information from the detection means (36),
- means (28, 34, 38, 40) for reducing dazzling of the driver of the motor vehicle caused by the light emitted by the oncoming vehicle (48), these means being controlled by the control means (30),
- means (32) for managing the lighting device (22) designed to increase the illumination of the lighting device (22) of the vehicle (20) and to avoid dazzling of the driver of the oncoming vehicle (48), these means being controlled by the control means (30), and
- the detection means (36) are designed to detect the presence and the position of one or more oncoming vehicles (48), **characterized in that** the control means (30) adapt the illumination zone (42) as a function of said presence and position of the oncoming vehicle (48) so as not to dazzle the driver of the oncoming vehicle (48),
- **in that**, in the illumination zone (42), illumination is minimized in a sub-zone (52) where the oncoming vehicle (48) is located, and
- **in that**, in the illumination zone (42), illumination is increased outside the sub-zone (52) where the oncoming or followed vehicle (48) is located.

2. Aid system according to the preceding claim, **characterized in that** the lighting device (22) is controlled by a pulsed signal (S) generated by the control means (30), and **in that** the means for reducing dazzling comprise at least one means equipped with obturators controlled by said pulsed signal (S) in synchronization with the lighting device (22).

3. Aid system according to the preceding claim, **characterized in that** the means equipped with obturators is a pair of spectacles and/or a windshield of said vehicle and/or a sun visor of said vehicle.

4. Aid system according to Claim 2 or 3, **characterized in that** the obturators comprise liquid crystals, the orientation of which is modified by the pulsed signal (S) .

5. Aid system according to one of the preceding claims, **characterized in that** the detection means (36) comprise a camera facing the exterior and toward the front of the vehicle (20).

6. Aid system according to any one of the preceding claims, in which the lighting device (22) comprises at least one light source of electroluminescent diode type, particularly a laser diode.

7. Motor vehicle comprising a lighting device (22) intended to illuminate a road scene (SR) at the front of the vehicle (20), means (36) for detecting an oncoming vehicle (48), and a driving aid system according to any one of the preceding claims.
